# EUROPEAN PATENT SPECIFICATION

(11) **EP 3 471 464 B1**
(45) Date of publication and mention of the grant of the patent: **01.04.2020**
(21) Application number: 17196692.2
(22) Date of filing: 16.10.2017
(51) Int. Cl.: H04W 48/18

(54) **METHOD AND APPARATUS FOR GRANTING ACCESS TO A COMMUNICATION SERVICE**
VERFAHREN UND VORRICHTUNG ZUR GEWÄHRUNG VON ZUGRIFFSRECHTEN EINES KOMMUNIKATIONSDIENSTES
PROCÉDÉ ET DISPOSITIF PERMETTANT D'ACCORDER DES DROITS D'ACCÈS À UN SERVICE DE COMMUNICATION

(43) Date of publication of application: 17.04.2019
(73) Proprietor: NTT DOCOMO, INC., Chiyoda-ku Tokyo 100-6150 (JP)
(72) Inventor: THAKOLSRI, Srisakul, 80687 Munich (DE); SAMA, Malla Reddy, 80687 Munich (DE); MINOKUCHI, Atsushi, Tokyo 100-6150 (JP)
(74) Representative: Viering, Jentschura & Partner mbB Patent- und Rechtsanwälte

(56) References cited:
- WO-A1-2016/119841
- WO-A1-2017/113109
- US-A1- 2016 352 734
- "3rd Generation Partnership Project; Technical Specification Group Services and System Aspects; System Architecture for the 5G System; Stage 2 (Release 15)", 3GPP STANDARD; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.4.0, 28 September 2017 (2017-09-28), pages 1-152, XP051337398, [retrieved on 2017-09-28]
- "3rd Generation Partnership Project; Technical Specification Group Services and System Aspects; Study on the security aspects of the next generation system (Release 14)", 3GPP DRAFT; S3-172095_TR_33899_130_CLEAR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 21 August 2017 (2017-08-21), XP051336126, Retrieved from the Internet: URL:http://www.3gpp.org/ftp/tsg_sa/WG3_Sec urity/TSGS3_88_Dali/Docs/ [retrieved on 2017-08-21]
- "3rd Generation Partnership Project; Technical Specification Group Services and System Aspects; Study on Architecture for Next Generation System (Release 14)", 3GPP STANDARD; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.2.1, 1 December 2016 (2016-12-01), pages 1-526, XP051229880, [retrieved on 2016-12-01]

## Description

The present disclosure relates to methods and to mobile communication network component arrangement for granting a subscriber terminal access to a communication service.

A core network of a mobile radio communication network according to 5G typically comprises multiple core network slices, wherein each core network slice serves for providing a certain communication service, such as V2X (Vehicle-to-Everything) or eMBB (enhanced Mobile Broadband). It may be desirable that certain communication services cannot be accessed by all users in certain specific regions. For example, it may be desirable that a vehicle related communication service (e.g., V2X service) cannot be accessed by a certain UE or a certain group of UEs in a particular geographical area due to the reason that the UE(s) is not having a subscription for such vehicle related communication service in that area. As another example, it may be desirable that a communication service for communication among drones cannot be used by drones of a packet delivery service in a high-security area such as an airport. WO 2017/113109 A1 relates to sliced network service provision in a 5G communication network. A Service Capability Exposure Function (SCEF), determines whether a UE is allowed to access a network slice.

WO 2016/119841 A1 relates to a policy control node configured to transmit a mobility node, access information indicating which geographical areas comprised in the mobile communications network the UE is allowed or denied access to. The mobility node creates handover restriction information based on the received access information from the policy node. The mobility node transmits the handover restriction information to a RAN node. The mobility node may be an MME (e.g. in a 4G system), a SGSN (e.g. in a 2G or 3G system) or a combined MME and SGSN node.

3GPP, TR 33.899 V1.3.0, XP051336126, discloses AMF: Access and Mobility Management Function, 5G/NG network, network slices and exchange of NSSAI (Network Slice Selection Assistance Information). For example, a UE requesting registration, transmits a registration request comprising NSSAI to a NG RAN. The NG RAN selects the appropriate AMF based on NSSAI.

Accordingly, mechanisms which allow supporting such use cases are desirable.

The present invention is disclosed according to the appended claims. Additional "embodiments", "aspects" and "examples" have only illustrative purpose and are not intended to extend the protection, which is solely defined by the claims. According to one embodiment, a method for granting access to a communication service is provided comprising receiving a request from a subscriber terminal of a mobile communication network for usage of a communication service in a specific region which the mobile communication network provides in the specific region, determining whether the subscriber terminal is allowed to use the communication service in the specific region based on a subscription of the subscriber terminal and/or the mobile communication network operator's policy, and granting the subscriber terminal access to the communication service depending on whether the subscriber terminal is allowed to use the communication service in the specific region based on the subscription of the subscriber terminal and/or based on the mobile communication network operator's policy.

According to one embodiment, a method for requesting a communication service is provided comprising a subscriber terminal receiving, from a mobile communication network, information specifying, for each of one or more communication services and each of one or more specific regions, whether the subscriber terminal is allowed usage of the communication service in the specific region based on a subscription of the subscriber terminal and/or the mobile communication network operator's policy, and comprising the subscriber terminal requesting usage of a communication service in a specific region based on the information.

According to further embodiments, a mobile communication network component arrangement and a subscriber terminal according to the above methods are provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a radio communication system.
Figure 2 shows an example of a configuration where a network slice is deployed in a specific area.
Figure 3 shows a message flow diagram illustrating a high-level registration procedure.
Figure 4 illustrates NEtwork Slice Area Restriction (NESAR) on tracking area level.
Figure 5 shows a message flow diagram illustrating an implementation based on a local policy available at an Access and Mobility Management Function (AMF) and/or a Network Slice Selection Function (NSSF), and provision of Network Slice Area Restriction (NESAR) information to the UE via the RAN (Radio Access Network).
Figure 6 shows a message flow diagram illustrating an implementation based on Policy Control Function (PCF) enhancements and provision of Network Slice Area Restriction (NESAR) information to the AMF and then further to the UE via the RAN.
Figure 7 shows a flow diagram illustrating configuration of a network slice area restriction in a mobile communication network by an application function outside of the mobile communication network.
Figure 8 shows a flow diagram illustrating a request for configuration of a network slice area restriction by a third party AAA (authentication, authorization and accounting) server.
Figure 9 shows a flow diagram illustrating a method for granting access to a communication service.
Figure 10 shows a mobile communication network component arrangement.
Figure 11 shows a flow diagram illustrating a method for requesting a communication service.
Figure 12 shows a subscriber terminal of a mobile communication system.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

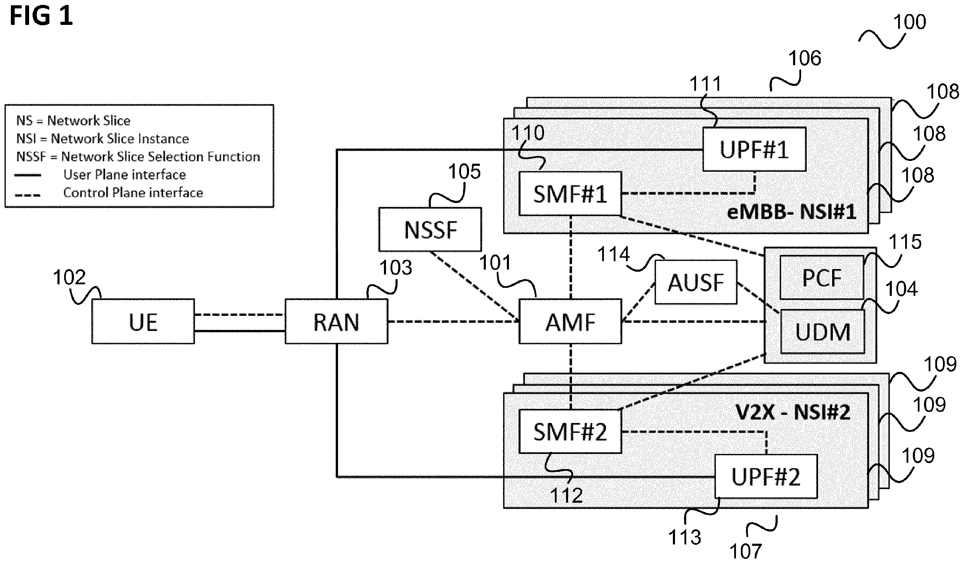

Figure 1 shows a radio communication system 100.

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network.

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node may provide a radio communication with the radio communication terminal device 102 over an air interface. It should be noted that the radio access network 103 may include any number of radio access network nodes.

The radio communication system 100 further includes a core network including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network further comprises an AUSF (Authentication Server Function) 114 and a PCF (Policy Control Function) 115.

The core network may have multiple network slices 106, 107 and for each network slice 106, 107, the operator may create multiple network slice instances (NSIs) 108, 109. In this example, the core network comprises a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in this example, each instance 108 of the first core network 106 comprises a first Session Management Function (SMF) 110 and a first User Plane Function (UPF) 111 and each instance 109 of the second core network slice instance 107 comprises a second Session Management Function (SMF) 112 and a second User Plane Function (UPF) 113.

There are scenarios where it is desirable that a UE may access a certain network slice 106, 107 only in a specific (geographic) region.

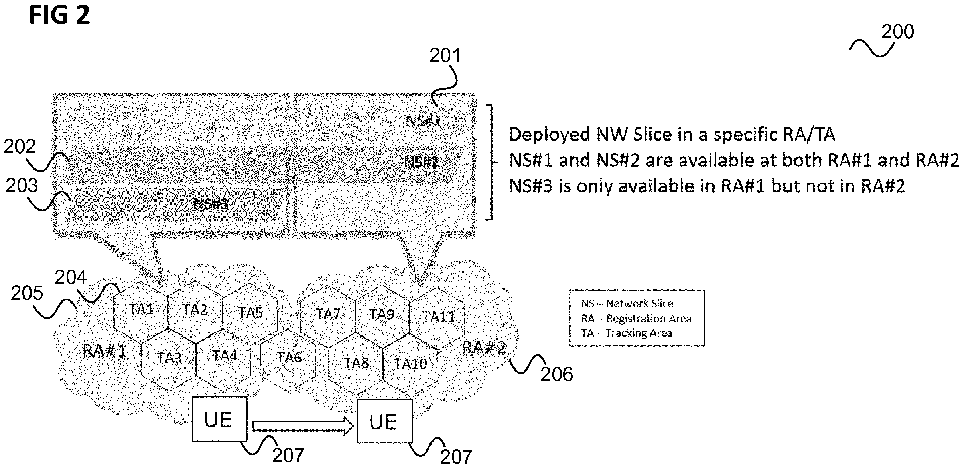

Figure 2 shows an example where network slice access is deployed in an operator's mobile network in a specific (geographic) area.

In this example, there are three network slices 201, 202, 203 of the core network of a mobile communication network and the coverage area of the mobile communication network comprises eleven tracking areas 204 denoted as TA1 to TA11, wherein TA1 to TA5 are part of a first registration area 205 and TA7 to TA11 are part of a second registration area 206 and TA6 is part of both registration areas 205, 206.

The first network slice 201 and the second network slice 202 are available in both registration areas 206, 207 but the third network slice 203 is only available in the first registration area 205.

A UE 207 may have a subscription for accessing the first network slice 201 and the third network slice 203 from anywhere in the operator's network (if available) but the UE 207 for example has a subscription for accessing the second network slice 202 only in a specific area, in this example only in the first registration area 205.

For this, according to various embodiments, a mechanism is provided to allow an operator to restrict the access by the UE 207 to a specific network slice, for which the UE 207 has a subscription, to a particular area (e.g., not to allow the UE 207 to access the second network slice 202 in the second registration area 206).

A possible use case of such as restriction is a local V2X service authority (e.g. in a "Smart City" scenario) in which a car operating as UE type has a subscription for an eMBB service for the whole area of a PLMN (Public Land Mobile Network), but for V2X service only in a specific area provided by the local authority.

Another use case in context of V2X is a V2X slice restriction for different classes of customers from the same enterprise. For example, a car manufacturer may have V2X network slices deployed in an operator's mobile radio communication network which are designed to serve different classes of customers:
- Premium V2X customer: allows using the V2X service for the whole mobile radio communication network (if available)
- Standard V2X customer: only allows using the V2X service in a specific area. Such a standard V2X customer could be a person who does not drive a lot outside of the area where he is living and hence has no need to pay for the premium V2X service.

When the Premium V2X customer moves across cities, taking into account his subscription profile, he will be able to continue using V2X across cities. In contrast, for a standard V2X customer, if a customer only subscribes for V2X service in the area of a first city A, when the customer drives to a second city, he will not be able to continue the use of the V2X service due to his subscription type of V2X service.

Another possible use case is a gaming hot spot. Based on a UE's subscription, a customer may only be allowed to join playing a game with others via his/her mobile phone in a certain area. The gaming service is for example served by a specific network slice, which is available in a PLMN, but restricted to the UE having a gaming subscription service for a certain location.

A further use case is a restricted zone for a drone operation for a certain group of UEs. For example, a network slice for operating a drone is available in a whole PLMN which any UE (i.e. any customer) may want to use. However, only a specific group of UEs is allowed to operate a drone in a restricted area, e.g., only an officer of an airport is allowed to operate a drone in the area of airport.

It should be noted that there are regulatory aspects specifically for drones. Two types of "drone UEs" can currently typically be observed in the field: a drone equipped with a cellular module certified for aerial usage and a drone carrying a cellular module that is only certified for terrestrial operation. However, usage according to the latter may not be permitted from a regulatory standpoint in certain regions wherein this may refer to regions on a country level, on a PLMN level (one operator does allow such aerial vehicle whereas another does not), or even on the RA/TA level (e.g., aerial vehicles from private use or from commercial enterprise are not allowed to be operated in a specific location that is sensitive or require security measure, e.g., like an airport/military base). In such a case, the uplink signal from such a UE could be regarded as jamming.

In this context, it may be desirable to specify which type of air-borne UE is allowed or is not allowed to connect to the cellular network in a certain region. One of the objectives of studying the necessary enhancements to support Aerial Vehicles (using e.g. an LTE network) is to specify whether an air-borne UE is certified or not for aerial usage. For example, a base station is made aware that a UE is certified (or not) based on a signalling from the core network (e.g. S1 signalling from a Mobility Management Entity). Such information can be used by the RAN, e.g. to perform appropriate control for aerial UEs or to identify UEs, which shall not operate as aerial UEs. Information whether a UE is certified/licensed/authorized to be an aerial UE provided to the RAN (e.g. a base station) can be based on the UE's location.

Approaches for restricting a UE's access to a network slice to a certain (geographic) region may be used to restrict an aerial vehicle on the RA/TA level by considering the network slicing concept. This may for example be applicable for a 5G communication system.

For example, a drone slice restriction for different classes or types of customers subscribing to a drone service may be implemented. A drone service provider may for example ask a mobile network operator to deploy a network slice specific for operating a drone. A drone operation network slice is deployed for the whole PLMN of the operator's network and there are different classes or types of customers subscribing to the drone service provided by the drone service provider, for example:
- Officer of an authority: operating a drone which can access the drone specific network slice from anywhere in the operator's network
- User from a packet delivery service: operating a drone which can access the drone specific network slice only in the area which is not sensitive or an area that does not require a high security.

When a drone operated by an officer from the authority enters in the area of airport, which is a high security area, the drone may continue flying and is able to access the drone specific network slice.

In contrast, when a drone operated by a user from the packet delivery service enters the area of the airport, it either stops flying immediately or continues with an alarm on the operator's side to return to the area before the drone enters the airport area (reactive approach), or before entering the airport area, the user of the drone gets an alarm that the respective tracking area or registration area is not allowed to be entered and hence the user should find an alternative route to reach the destination to deliver the packet.

It should be noted that according to 3GPP (Third Generation Partnership Project) a Service Area Restriction may be used to define areas in which a UE may or may not initiate communication with a mobile communication network. In an allowed area the UE is permitted to initiate communication with the mobile communication network as allowed by its subscription. In a non-allowed area, the UE is restricted based on its subscription. The UE and the mobile communication network are in this case not allowed to initiate any Service Requests or any Session Management (SM) signalling (e.g. a PDU session establishment request) to obtain user services. The Service Area Restriction may include one or more (e.g. up to 16) entire Tracking Areas. The UE's subscription stored at the UDM (Unified Data Management) may contain either allowed or non-allowed areas using explicit Tracking Area identities. An allowed area may also be limited by a maximum allowed number of tracking areas or may be configured as unlimited i.e. may include all tracking areas of the PLMN. The AMF fetches from the UDM the service area restriction that may be further adjusted by a PCF (Policy Control Function). The PCF or the UDM may update the service restriction area. The AMF provides the service area restriction to the UE and the RAN. This Service Area Restriction however does not allow restricting the access by a UE to a particular network slice in a particular area based on an operator's policy.

According to various embodiments, access to network slices may be granted and rejected in course of a registration procedure, which a UE for example performs when it is switched on or when it move to a new base station. In addition, such granting or rejection of an access to a specific network slice may be performed, when a UE sends a request for establishment a PDU session for the network slice.

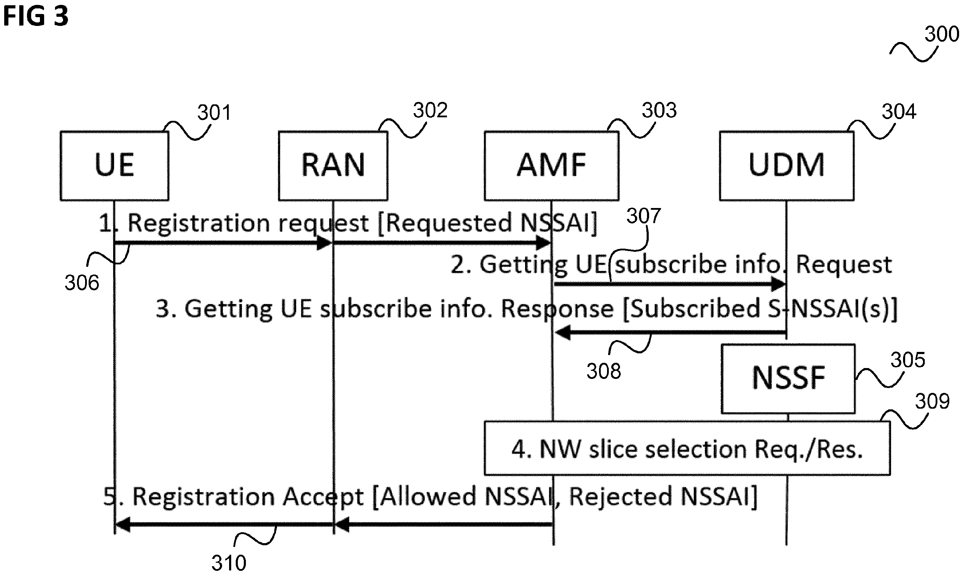

Figure 3 shows a message flow diagram 300 illustrating a high level of registration procedure.

The message flow takes place between a UE 301, a RAN 302, an AMF 303, a UDM 304 and an NSSF 305.

In 306, the UE 301 sends a registration request via the RAN 302 to the AMF 303. The registration request includes NSSAI (Network Slice Selection Assistance information) including the one or more requested S-NSSAIs indicating the network slice or slices the UE wishes to register.

An S-NSSAI (Single Network Slice Selection Assistance information) identifies a network slice and is comprised of:
- A Slice/Service type (SST), which refers to the expected Network Slice behaviour in terms of features and services;
- A Slice Differentiator (SD) which is optional information that complements the slice/service type(s) to differentiate amongst multiple network slices of the same slice/service type.

An allowed NSSAI is an NSSAI provided by the serving PLMN (Public Land Mobile Network) during e.g. a registration procedure, indicating the NSSAI allowed by the network for a UE in the serving PLMN for the current registration area.

A configured NSSAI is an NSSAI that has been provisioned in the UE.

A requested NSSAI is the NSSAI that the UE may provide to the network.

A subscribed S-NSSAI is an S-NSSAI based on subscriber information, which a UE is subscribed to use in a PLMN
In 307 and 308, the AMF 303 retrieves the subscribed NSSAI from the UDM 304 that indicates which network slice the UE has subscribed.

In 309, the AMF 303 or the NSSF 305 determines the Allowed NSSAI, which is the list of S-NSSAI(s) in the Requested NSSAI permitted based on the Subscribed S-NSSAIs.

In 310, the AMF 303 sends a Registration Accept to the UE 301 with the Allowed NSSAI.

The AMF 303 may indicate the Requested S-NSSAI(s) not included in the Allowed NSSAI and may indicate whether the rejection is permanent (e.g. the S-NSSAI is not supported in the PLMN, i.e. is a Permanently Rejected S-NSSAI) or is temporary (e.g. the S-NSSAI is not currently available in the Registration Area, i.e. is a Temporarily Rejected S-NSSAI).

According to various embodiments, a Network Slice Area Restriction (NESAR) mechanism is used which allows configuration of an area where a UE is allowed or not allowed to access a specific network slice based on the UE's subscription profile and the operator's policy, even when the network slice is available (i.e. deployed, i.e. can be used by a UE with a suitable subscription of the operator's policy allows it) in this specific area.

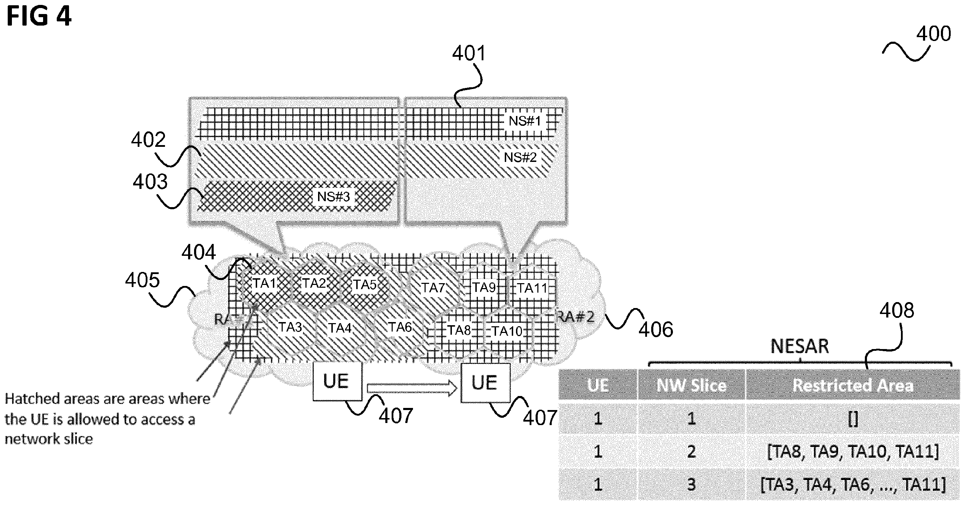

Figure 4 illustrates Network Slice Area Restriction on tracking area level.

Similarly to the scenario of figure 2, there are three network slices 401, 402, 403 of the core network of a mobile communication network and the coverage area of the mobile communication network comprises eleven tracking areas 404 denoted as TA1 to TA11, wherein TA1 to TA5 are part of a first registration area 405 and TA7 to TA11 are part of a second registration area 406 and TA6 is part of both registration areas 405, 406.

Similar to the description of figure 2, the first network slice 401 and the second network slice 402 are available in both registration areas 406, 407 but the third network slice 403 is only available in the first registration area 405.

In figure 4 there is a restriction of slice usage on a tracking area level.

The restriction is given by means of a (NEtwork Slice Arae Restriction (NESAR) table 408 (or generally NESAR information) which indicates for a UE 407 and for the network slices 401, 402, 403 which tracking areas are restricted for the UE 407 for the respective network slice.

In this example, there is no restriction for the first network slice 401, the UE 407 may not use the second network slice 402 in tracking areas TA8 to TA11 (as indicated by the diagonally hatched area) and the UE 407 may not use the third network slice 403 in tracking areas TA3, TA4 and TA6 to TA11 (as indicated by the diagonally cross hatched area).

According to one embodiment, the NESAR takes the operator's policy into account whether to restrict the UE not to access a particular network slice.

It should further be noted that the NESAR indicates whether the UE is not allowed to access specific network slice in an area even if the network slice is available (e.g. deployed or provided by the network, e.g. usable with proper subscription) in the area.

Additionally, with respect to granularity, an S-NSSAI may be rejected on registration area level, i.e. with a coarser granularity than the NESAR of figure 4, which happens on tracking area level.

Furthermore, according to various embodiments, the UE may be informed about the restrictions such that it can avoid requesting registration to a network slice restricted in an area in which the UE is located.

The NESAR mechanism may be implemented based on one or more of
1) A local policy available at the AMF and/or NSSF;
2) PCF enhancements and provision of NESAR information to the AMF;
3) AUSF (Authentication Server Function) enhancements;
4) An NSSF with AUSF or PCF enhancements;
5) UDM enhancements and provision of NESAR information to the AMF.

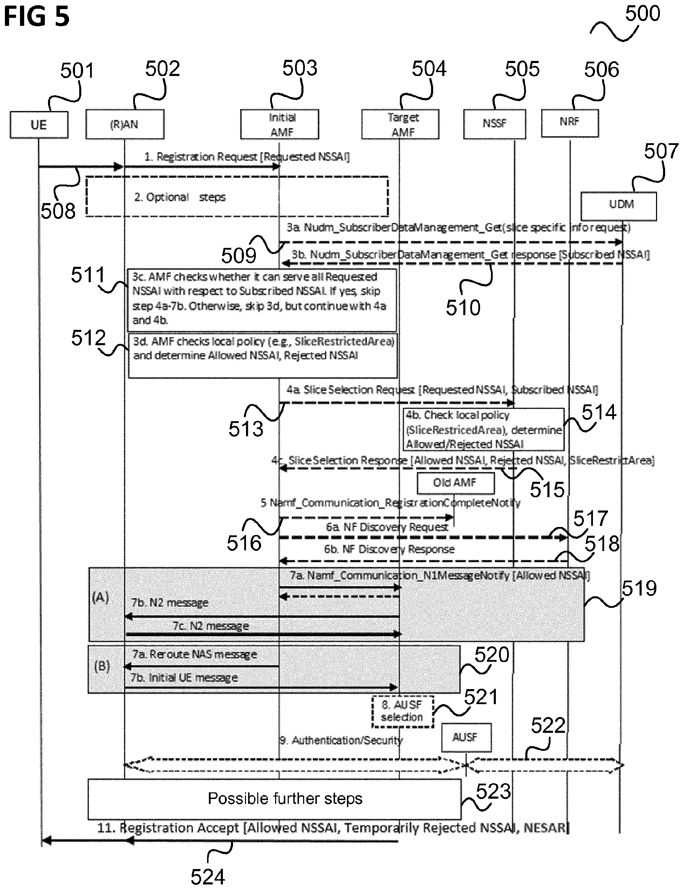

Figure 5 shows a message flow diagram 500 illustrating an implementation based on a local policy available at the AMF and/or the NSSF.

The message flow takes place between a UE 501, a RAN 502, an initial AMF 503, a target AMF 504, an NSSF 505, an NRF 506 and a UDM 507.

It shall be noted that all signalling steps with solid line are mandatory, whereas all other signalling steps with dotted line are optional.

508, 509, 510 correspond to 306, 307, 308 of figure 3.

In 511, the (initial) AMF 303 checks whether it can serve all Requested NSSAI with respect to the Subscribed NSSAI. If yes, 513 to 515 are skipped (516 to 520 may be skipped as well). Otherwise, 512 is skipped.

If is not skipped, in 512, the AMF 503 checks its local policy whether the UE 501 is allowed to access a network slice in the particular area in which the UE 501 is located (e.g. the tracking area or registration area where the UE 501 is located).

Alternatively, if 512 is skipped, in 514, following a slice selection request by the initial AMF 503 in 513, the NSSF 505 checks its local policy whether the UE 501 is allowed to access a network slice in the particular area in which the UE 501 is located (e.g. the tracking area or registration area where the UE 501 is located).

Further, The AMF 303 or the NSSF 505 determines the Allowed NSSAI, which is a list of S-NSSAI(s) in the Requested NSSAI permitted based on the Subscribed S-NSSAIs and determines the Rejected NSSAI, which is a list of S-NSSAI(s) that is/are in the Requested S-NSSAI(s) but not included in the Allowed NSSAI.

In case that the NSSF 505 performs this task, it sends a slice selection response in 515 to the AMF 503.

Then, if they are not skipped, further message exchanges are carried out such as a notification of an old AMF in 516, a network function discovery request and response in 517 and 518 as well as message exchanges between the initial AMF 503 and a target AMF 504 and rerouting in 519 and 520.

Additionally, AUSF selection in 521 and an authentication and security setup in 522 as well as possible further operations 523 are performed.

In 524, the (target) AMF 510 sends a Registration Accept to the UE 501 with the Allowed NSSAI, Temporarily Rejected NSSAI as well as the NESAR information, e.g. the NESAR table 408 via the RAN 502. The NESAR may be sent as a separated parameter as indicated in 524. Alternatively, it may be included as a part of Access and Mobility control policy. The UE 501 then stores the Allowed NSSAI, Temporarily Rejected NSSAI as well as the NESAR information. The RAN 502 may also store the NESAR information for further use, e.g. enforcement of the NESAR when the UE sends a Registration request or a request for a particular PDU session of a certain network slice.

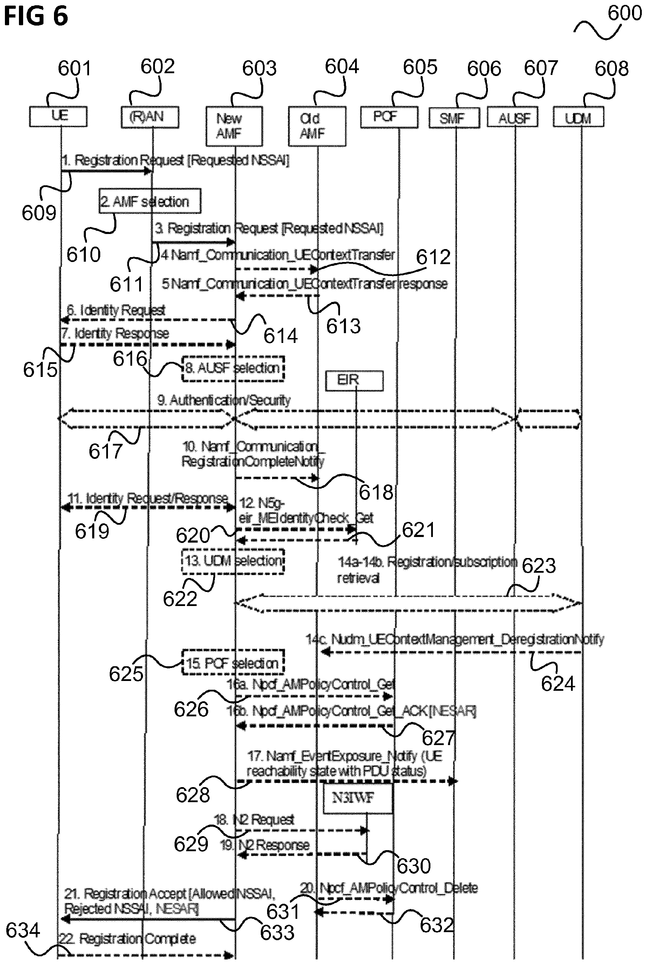

Figure 6 shows a message flow diagram 600 illustrating an implementation based on PCF enhancements and provision of NESAR information to the AMF.

The message flow takes place between a UE 601, a RAN 602, a new AMF 603, an old AMF 604, a PCF 605, an SMF 606, an AUSF 607 and a UDM 608.

It shall be noted that all signalling steps with solid line are mandatory, whereas all other signalling steps with dotted line are optional.

In 609, the UE 601 sends a registration request as in 306 of figure 3 to the RAN 602.

In 610, the RAN 602 selects an AMF and forwards the registration request to the selected AMF (assumed to be the new AMF 603) in 611.

In 612 and 613 the new AMF 603 and the old AMF 604 perform a context transfer for the UE 601.

In 614 and 615 the AMF 603 obtains an identification from the UE 601.

In 616, the AMF 603 performs AUSF selection.

In 617, authentication and security setup is performed.

In 618, the AMF 603 notifies the old AMF 604 about completed registration.

In 619, the UE 601 and the AMF 603 exchange an identity request/response.

In 620 and 621, the AMF 603 exchanges messages for identity checking with the an Equipment Identity Register (EIR).

In 622, the AMF 603 performs UDM selection and in 623 registration and subscription retrieval from the UDM 608.

In 624, the UDM 608 sends a deregistration notification to the old AMF 604.

In 625, the AMF 603 performs PCF selection.

In 626, the AMF 603 requests NESAR information from the PCF 605.

The PCF 605 then gets policy subscription related information. If this is not available, then the PCF 605 retrieves it from the UE subscription repository and in 627, the PCF 605 responds to the AMF's request of 625 (e.g. a Npcf_AMPolicyControl_Get service operation) and provides Access and Mobility Control (AMC) Rules and the UE Policy. The response includes the NESAR information, e.g. NESAR table 408.

The AMF 603 then deploys the AMC policy, which for example includes storing the NESAR information.

In 628, the AMF 603 notifies the SMF 606 about the UE reachability state with PDU (Packet Data Unit) status and performs, in 629 and 630, a N2 request/response exchange with an N3IWF (non-3GPP Interworking Function).

In 631 and 632, the old AMF 604 performs a policy control delete message exchange with the PCF 605.

In 633, the AMF 603 sends a Registration Accept to the UE 601 with the UE policy and NESAR information via the RAN 602. The RAN 502 may also store the NESAR information for further use, e.g. enforcement of the NESAR.

The UE 601 sends a corresponding acknowledgement in 634.

As shown in figure 5 and 6, the policy on which area (e.g., RA or TA) in the mobile network an access to a specific network slice is restricted can be made available at many places, e.g., in AMF/NSSF (figure 5) or in PCF/UDM (figure 6) .

In both figures 5 and 6 during registration procedure the AMF has NESAR information (corresponding to a NESAR policy), stores it in the AMF, enforces such NESAR policy and may send the NESAR information to the UE via the RAN.

The RAN or the UE or both may store such NESAR information to further enforcing the NESAR policy in the future in the RAN or in the UE. For example, if the NESAR policy is stored in the UE, when the UE enters an area, which the UE is not allowed to access a particular network slice or a particular service, the UE will not send the request for establishment of the session for the service or for a particular network slice that is restricted for the UE not to access. If the NESAR policy is stored only in the RAN but not on the UE, the UE may send a request for establishment a session for a particular network slice in the area that the UE is not allowed to access, then the RAN may send a rejection to the UE's request immediately and no need to forward the request to the core network

In case that a network slice is owned by a network operator, i.e. an network operator provides a service directly to its customer, the network operator can configure a restricted area for a particular network slice (i.e. a restriction of an access to the network slice in a certain area for a certain UE) either in the UE's subscription profile, or directly configure it at one of the network functions in its network, e.g., at the PCF, or AMF or NSSF etc.

In case that a network slice is deployed by the network operator, but the request for deploying the network slice is coming from a third party service provider, who provides a service to the customer, then the third party service may own an application function (e.g. a server), which is outside of the operator's network. This application function/server outside of operator's network may send a request to the operator that the third party service provider wants to restrict a UE or a group of UEs to not be able to access a specific network slice in a particular region or area. Once the operator's network receives such a request it can send the request to one of network functions in the operator's network to store such a network slice restriction area policy (or network slice restriction area configuration) in the network functions and enforce the network slice restriction area policy (or configuration) as needed.

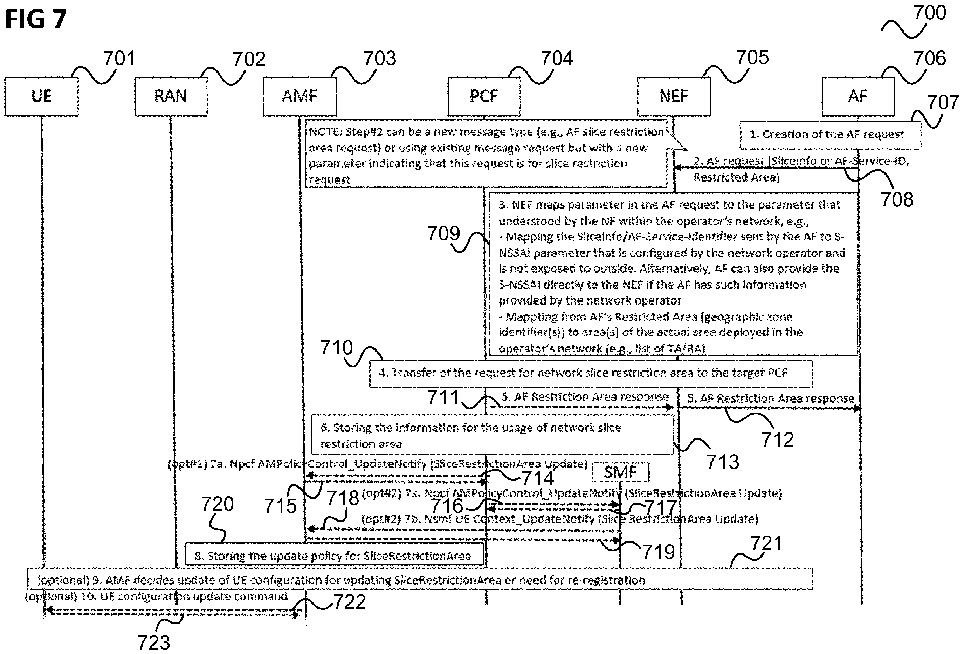

Figure 7 shows a flow diagram 700 illustrating configuration of a network slice area restriction in a mobile communication network by an application function outside of the mobile communication network.

The message flow takes place between a UE 701, a RAN 702, an AMF 703, a PCF 704, an NEF (Network Exposure Function) 705 and an AF (application function) 706.

In 707, the AF 706 creates an AF request.

In 708, the AF 706 sends the AF request to the NEF 705. This can be performed by means of a new message type (e.g. an AF slice restriction area request) or using an existing message request but with a new parameter indicating that this request is for a slice restriction request.

In 709, the NEF 705 maps one or more parameters in the AF request to the corresponding parameter(s) that is/are understood by the NF within the operator's network. For example, this may include mapping a SliceInfo/AF-Service-Identifier sent by the AF to an S-NSSAI parameter that is configured by the network operator and is not exposed to outside. Alternatively, the AF 706 can also provide the S-NSSAI directly to the NEF 705 if the AF 706 has such information provided by the network operator. This may for example also include mapping of the AF's restricted area (e.g. in the form of one or more geographic zone identifier(s)) to one or more areas of the actual area deployed in the operator's network (e.g. to a list of TAs or RAs).

In 710, the NEF 705 transfers the request for network slice area restriction to the target PCF 704.

In 711 and 712, the PCF 704 sends an AF area restriction response via the NEF 705 to the AF 706.

In 713, the PCF 704 stores the network slice area restriction information.

In 714 and 715, as a first option, the PCF 704 may exchange messages with the AMF 703 for updating the network slice area restriction.

As a second option, this may be performed via an SMF in 716 to 719.

In 720, the AMF 703 stores the update of the network slice area restriction.

In 721, the AMF 703 may optionally decide whether to update the UE configuration according to the update of the network slice area restriction or whether to require the UE 701 to re-register.

In 722 and 723, the AMF 703 and the UE 701 may exchange messages for updating the UE configuration to update the UE about the update NESAR information, which could be a new parameter sent in the step 723, or a new information as a part of the Access and Mobility Control (AMC) Rules and the UE Policy.

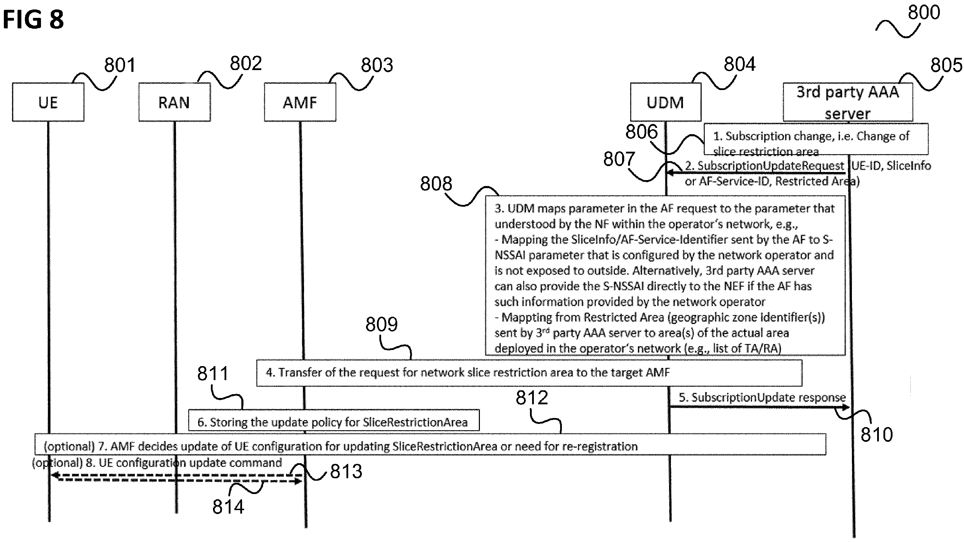

Figure 8 shows a flow diagram 800 illustrating a request for configuration of a network slice area restriction by a third party AAA (authentication, authorization and accounting) server.

The message flow takes place between a UE 801, a RAN 802, an AMF 803, a UDM 804 and a third party AAA server 805.

In 806, the AAA server 805 performs a subscription change for a UE involving a change of slice area restriction for the UE.

In 807, the AA server 805 sends a subscription update request to the UDM 804 specifying the UE, a slice or AF service identification and the restricted area.

In 808, the UDM 804 maps one or more parameters in the AF request to the corresponding parameter(s) that is/are understood by the NF within the operator's network. For example, this may include mapping a SliceInfo/AF-Service-Identifier sent by the AF to an S-NSSAI parameter that is configured by the network operator and is not exposed to outside. Alternatively, the AF 805 can also provide the S-NSSAI directly to the UDM 804 if the AF 805 has such information provided by the network operator. This may for example also include mapping of the restricted area (e.g. in form of one or more geographic zone identifier(s)) sent by the AAA server 805 to one or more areas of the actual area deployed in the operator's network (e.g. to a corresponding list of TAs or RAs).

In 809, the UDM 804 transfers the request for network slice area restriction to the target AMF 803.

In 810, the UDM 804 sends a subscription update response to the AAA server 805.

In 811, the AMF 803 stores the update for the slice area restriction.

In 812, the AMF 803 may optionally decide whether to update the UE configuration according to the update of the network slice area restriction or whether to require the UE 801 to re-register.

In 813 and 814, the AMF 803 and the UE 801 may exchange messages for updating the UE configuration to update the UE about the update NESAR information, which could be a new parameter sent in the step 723, or a new information as a part of the Access and Mobility Control (AMC) Rules and the UE Policy.

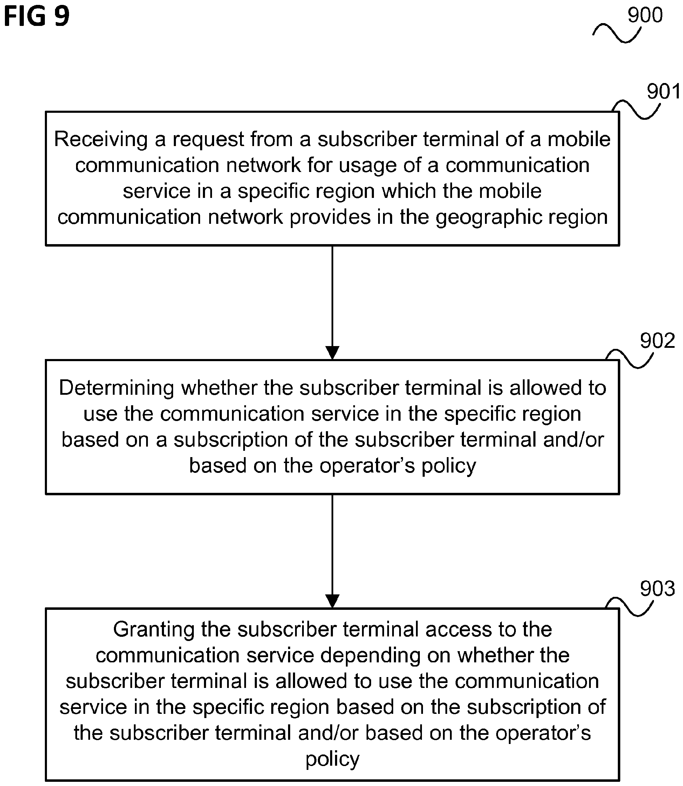

In summary, according to various embodiments, a method for is provided as illustrated in figure 9.

Figure 9 shows a flow diagram 900 illustrating a method for granting access to a communication service.

In 901, a request is received from a subscriber terminal of a mobile communication network for usage of a communication service in a specific region which the mobile communication network provides in the specific region.

In 902, it is determined whether the subscriber terminal is allowed to use the communication service in the specific region based on a subscription of the subscriber terminal and/or based on the mobile communication network operator's policy.

In 903, the subscriber terminal is granted access to the communication service depending on whether the subscriber terminal is allowed to use the communication service in the specific region based on the subscription of the subscriber terminal and/or based on the mobile communication network operator's policy.

The specific region may be a geographic region or may be a logical region. For example, the specific region is a set of one or more tracking areas or a set of one or more registration areas.

The mobile communication network operator's policy can be seen as an access policy.

According to various embodiments, in other words, a mobile communication network comprises a mechanism for restricting the usage of a communication service (e.g. corresponding to a specific core network slice or corresponding to a specific RAN network slice) in a specific location or specific area based on a mobile terminal subscription. This by include taking into account operator policies. For example, the access by a UE to a particular network slice in a particular area is restricted, e.g. based on the mobile communication network operator's policy, and/or based on the UE's subscription profile. According to various embodiments, a mobile communication network comprises a mechanism enabling its operator to restrict the access to a particular network slice in a specific area for a UE by taking into account both the UE's subscription profile and an operator's policy, e.g. with a granularity of Tracking Area.

The determination whether the subscriber terminal is allowed to use (i.e. has the right to use) the communication service in the specific region based on a subscription of the subscriber terminal may be performed based on data specifying, for a specific communication service and for a specific subscription, e.g. a subscription type (such as standard or premium) and for a specific region (e.g. a tracking area or a registration area determined by the network operator), whether a mobile terminal having a subscription of the type may use the communication service in the specific region. The data may include this information for a plurality of specific regions, for a plurality of subscription types and for a plurality of communication services.

It should be noted that the communication service being provided in the specific region may be understood as the communication region being available in or deployed for the specific region. This means that the communication service is usable by the subscriber terminal if it has a proper subscription. If it has not a suitable subscription and may not use the communication service, there may still be one or more other subscriber terminals which have a subscription allowing usage of the communication service in the specific region.

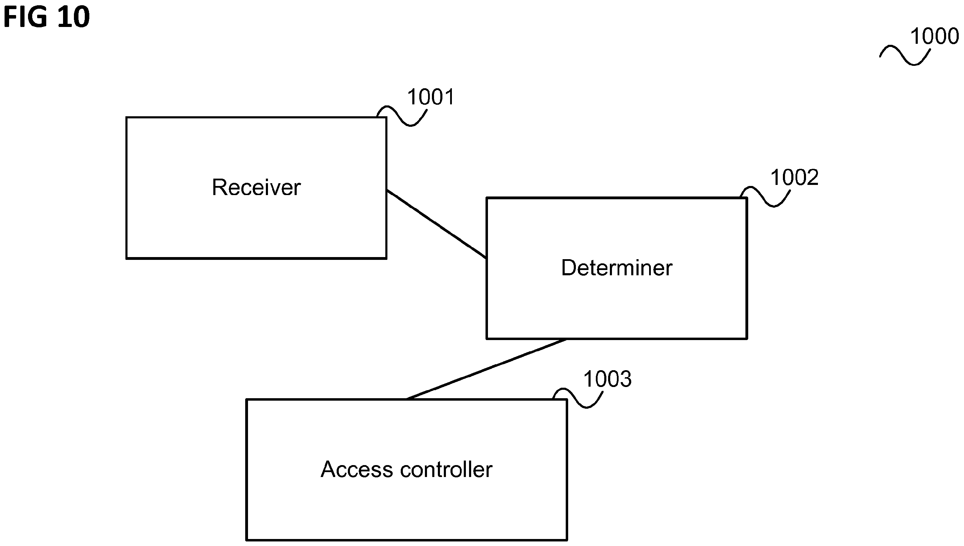

The method of figure 9 is for example carried out by a mobile communication network component arrangement as illustrated in figure 10.

Figure 10 shows a mobile communication network component arrangement 1000.

The mobile communication network component arrangement 1000 comprises a receiver 1001 configured to receiving a request from a subscriber terminal of a mobile communication network for usage of a communication service in a specific region which the mobile communication network provides in the specific region.

Further, the mobile communication network component arrangement 1000 comprises a determiner 1002 configured to determine whether the subscriber terminal is allowed to use the communication service in the specific region based on a subscription of the subscriber terminal and/or based on the operator's policy.

The mobile communication network component arrangement 1000 further comprises an access controller 1003 configured to granting the subscriber terminal access to the communication service depending on whether the subscriber terminal is allowed to use the communication service in the specific region based on the subscription of the subscriber terminal and/or based on the operator's policy.

It should be noted that there may be a third party service provider connected to the mobile communication component arrangement which operates a s a requester for configuring network slice area restriction, e.g. corresponding to the examples of figures 7 and 8.

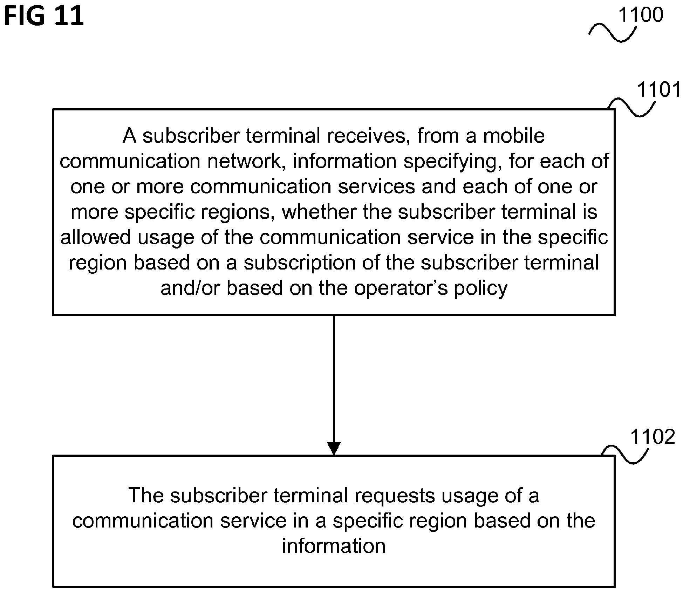

According to various embodiments, a method is provided as illustrated in figure 11.

Figure 11 shows a flow diagram 1100 illustrating a method for requesting a communication service.

In 1101 a subscriber terminal receives, from a mobile communication network, information specifying, for each of one or more communication services and each of one or more specific regions, whether the subscriber terminal is allowed usage of the communication service in the specific region based on a subscription of the subscriber terminal and/or based on the operator's policy.

In 1102 the subscriber terminal requests usage of a communication service in a specific region based on the information.

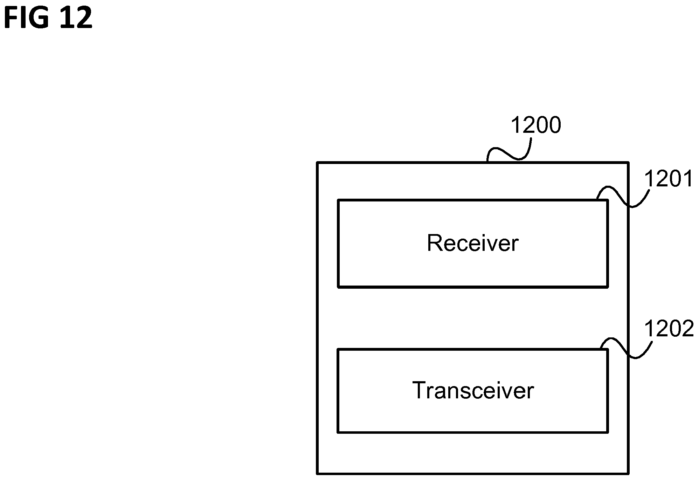

The method of figure 11 is for example carried out by a subscriber terminal as illustrated in figure 12.

Figure 12 shows a subscriber terminal 1200 of a mobile communication system.

The subscriber terminal 1200 comprises a receiver 1201 configured to receive, from a mobile communication network, information specifying, for each of one or more communication services and each of one or more specific regions, whether the subscriber terminal is allowed usage of the communication service in the region based on a subscription of the subscriber terminal and/or based on the operator's policy.

Further, the subscriber terminal 1200 comprises a transceiver 1202 configured to request usage of a communication service in a specific region based on the information.

According to a further Example, a method for restricting the access to a particular network slice in a mobile communication network by a User Equipment (UE) is provided comprising:
- a Radio Access Network (RAN) enabling a UE to access the mobile communication network;
- a mobile core network of the mobile communication network consisting of a set of network slices for different types of network slices;
- the UE accessing the mobile communication network and accessing a particular network slice of the set of network slices;
- an Access and Mobility Management Function (AMF) handling mobility management and mobile network access control for the UE to access the mobile communication network;
- a UE subscription profile (User Data Repository, UDR) storing relevant network slice information for the UE;
- a network function storing a policy of an UE of the mobile communication network including a list of one or more network slices to which the UE is not allowed access in a particular area;
- a network function providing the operator's policy to a network function for enforcing the operator's policy, or to the radio access network, or to the UE;
- a network function enforcing the operator's policy including the list of one or more network slices to which the UE is not allowed access in the particular area.

The network function storing the operator's policy including the list of one or more network slices to which the UE is not allowed to access in a particular area, can be, for example, a Policy Control Function (PCF) or a User Data Repository (UDR) or a Access and Mobility Management Function (AMF), or a Network Slice Selection Function (NSSF).

The network function providing the operator's policy to a network function for enforcing the operator's policy can be, for example, a PCF, AMF, UDM, or NSSF.

The network function enforcing the operator's policy including the list of one or more network slices to which the UE is not allowed to access in a particular area can for example be an AMF or the RAN. Furthermore, the UE may also enforce the operator's policy, e.g. avoid requesting access to a network slice in a specific area/region where it is not allowed access to the network slice.

It should be noted that embodiments and features described in context of one of the above Examples may be analogously applied to any one of the other Examples.

The components of the mobile communication network component arrangement and the subscriber terminal (e.g. the receivers, the transceiver, the determiner and the access controller) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit".

It should further be noted that the components of the communication network component arrangement may be provided by a single device (e.g. a single computer) or by a distributed system, i.e. a plurality of devices of the mobile communication network.

The communication network component arrangement and the subscriber terminal may be part of a mobile communication system, e.g. a 5G communication system, whose network side comprises the communication network component arrangement. While specific aspects have been described, it should be understood by those skilled in the art that various changes in form and detail may be made therein without departing from the scope of the aspects of this disclosure as defined by the appended claims. The scope is thus indicated by the appended claims and all changes which come within the meaning and range of the claims are therefore intended to be embraced.

## Claims

1. A method executed by an Access and Mobility Management Function, AMF (303), for granting a subscriber terminal (301) access to a communication service comprising:
Receiving a request from a subscriber terminal of a 5G mobile communication network for usage of a communication service in a specific location which the mobile communication network provides in the specific location, wherein the mobile communication network provides the communication service by means of a network slice in the core network and in the radio access network;
Determining whether the subscriber terminal is allowed to use the communication service in the specific location based on a subscription of the subscriber terminal and/or based on the mobile communication network operator's policy, wherein determining whether the subscriber terminal is allowed to use the communication service comprises determining whether the subscriber terminal is allowed to access the network slice in the core network and in the radio access network;
Granting the subscriber terminal access to the communication service depending on whether the subscriber terminal is allowed to use the communication service in the specific location based on the subscription of the subscriber terminal and/or based on the mobile communication network operator's policy including obtaining network slice area restriction information from a Network Function in the 5G mobile communication network and providing the subscriber terminal access to the communication service based on the network slice area restriction information, wherein the network slice area restriction information comprises a list of core network slices and, for each core network slice, an indication in which area the core network slice may be access by the subscriber terminal; and
Providing the subscriber terminal with the network slice area restriction information.

2. The method according to claim 1, wherein determining whether the subscriber terminal is allowed to use the communication service in the specific location is further based on a communication service access restriction request by a third party service provider.

3. The method according to claim 1 or 2, wherein the specific location is a registration area or wherein the specific location is a tracking area.

4. The method according to claim 1, wherein the Network Function in the 5G mobile communication network is a Policy Control Function (PCF) or a Network Slice Section Function (NSSF).

5. The method according to claim 1, wherein the network slice area restriction information specifies, for each of one or more network slices in the core network or in the radio access network, and each of one or more specific locations, whether the subscriber terminal is allowed to access to the network slice in the specific location.

6. The method according to any one of claims 1 to 5, further comprising sending the network slice area restriction information to the subscriber terminal.

7. A mobile communication network component arrangement comprising an Access and Mobility Management Function, AMF (303), wherein the AMF (303) comprises:
a receiver configured to receive a request from a subscriber terminal of a 5G mobile communication network for usage of a communication service in a specific location which the mobile communication network provides in the specific location, wherein the mobile communication network provides the communication service by means of a network slice in the core network and in the radio access network;
a determiner configured to determine whether the subscriber terminal is allowed to use the communication service in the specific location based on a subscription of the subscriber terminal and/or based on the mobile communication network operator's policy, wherein the determiner is further configured to determine whether the subscriber terminal is allowed to access the network slice in the core network and in the radio access network;
an access controller configured to grant the subscriber terminal access to the communication service depending on whether the subscriber terminal is allowed to use the communication service in the specific location based on the subscription of the subscriber terminal and/or based on the mobile communication network operator's policy including obtaining network slice area restriction information from a Network Function in the 5G mobile communication network and providing the subscriber terminal access to the communication service based on the network slice area restriction information, wherein the network slice area restriction information comprises a list of core network slices and, for each core network slice, an indication in which area the core network slice may be access by the subscriber terminal; and
a transmitter configured to provide the subscriber terminal with the network slice area restriction information.

## Patentansprüche

1. Ein Verfahren ausgeführt von einer Zugangs- und Mobilitätsverwaltungsfunktion, AMF (303), um einem Teilnehmerendgerät (301) Zugang zu einem Kommunikationsdienst zu gewähren, aufweisend:
Empfangen einer Anfrage von einem Teilnehmerendgerät eines 5G-Mobilkommunikationsnetzwerks zum Benutzen eines Kommunikationsdienstes an einem spezifischen Ort, welchen das Mobilkommunikationsnetzwerk an dem spezifischen Ort zur Verfügung stellt, wobei das mobile Kommunikationsnetzwerk den Kommunikationsdienst mittels einer Netzwerkschicht in dem Kernnetzwerk und in dem Funkzugangsnetzwerk zur Verfügung stellt;
Ermitteln, ob das Teilnehmerendgerät berechtigt ist, den Kommunikationsdienst an dem spezifischen Ort zu benutzen, basierend auf einer Registrierung des Teilnehmerendgerätes und/oder basierend auf den Richtlinien des Mobilkommunikationsnetzwerkbetreibers, wobei Ermitteln, ob das Teilnehmerendgerät berechtigt ist, den Kommunikationsdienst zu benutzen, Ermitteln, ob das Teilnehmerendgerät berechtigt ist, auf die Netzwerkschicht in dem Kernnetzwerk und in dem Funkzugangsnetzwerk zuzugreifen, aufweist;
dem Teilnehmerendgerät Zugang zu dem Kommunikationsdienst gewähren, abhängig davon, ob das Teilnehmerendgerät berechtigt ist, den Kommunikationsdienst an dem spezifischen Ort zu benutzen, basierend auf der Registrierung des Teilnehmerendgerätes und/oder basierend auf den Richtlinien des Mobilkommunikationsnetzwerkbetreibers, aufweisend Erhalten von Netzwerkschichtbereichseinschränkungsinformationen von einer Netzwerkfunktion in dem 5G-Mobilkommunikationsnetzwerk und zur Verfügung stellen des Teilnehmerendgerätzugangs zu dem Kommunikationsdienst, basierend auf den Netzwerkschichtbereichseinschränkungsinformationen, wobei die Netzwerkschichtbereichseinschränkungsinformationen eine Liste von Kernnetzwerkschichten aufweisen, und für jede Kernnetzwerkschicht ein Kennzeichen, in welchem Bereich auf die Kernnetzwerkschicht von einem Teilnehmerendgerät zugegriffen werden kann; und
dem Teilnehmerendgerät die Netzwerkschichtbereichseinschränkungsinformationen zur Verfügung stellen.

2. Das Verfahren gemäß Anspruch 1, wobei Ermitteln, ob das Teilnehmerendgerät berechtigt ist, den Kommunikationsdienst an dem spezifischen Ort zu benutzen, ferner auf einer Kommunikationsdienstzugangsbeschränkungsanfrage durch einen Dienstanbieter einer dritten Partei basiert.

3. Das Verfahren gemäß Anspruch 1 oder 2, wobei der spezifische Ort ein registrierter Bereich ist oder wobei der spezifische Ort ein Nachverfolgungsbereich ist.

4. Das Verfahren gemäß Anspruch 1, wobei die Netzwerkfunktion in dem 5G-Mobilkommunikationsnetzwerk eine Richtlinienkontrollfunktion (PCF) oder eine Netzwerkschichtauswahlfunktion (NSSF) ist.

5. Das Verfahren gemäß Anspruch 1, wobei die Netzwerkschichtbereichseinschränkungsinformationen für jedes des einen oder der mehreren Netzwerkschichten in dem Kernnetzwerk oder dem Funkzugangsnetzwerk und jeden des einen oder der mehreren spezifischen Orte spezifizieren, ob das Teilnehmerendgerät berechtigt ist, auf die Netzwerkschicht an dem spezifischen Ort zuzugreifen.

6. Das Verfahren gemäß einem der Ansprüche 1 bis 5, ferner Senden der Netzwerkschichtbereichseinschränkungsinformationen an das Teilnehmerendgerät aufweisend.

7. Eine Mobilkommunikationsnetzwerkkomponentenanordnung, aufweisend eine Zugangs- und Mobilitätsverwaltungsfunktion, AMF (303), wobei die AMF (303) aufweist:
einen Empfänger, eingerichtet zum Empfangen einer Anfrage von einem Teilnehmerendgerät eines 5G-Mobilkommunikatiionsnetzwerk zum Benutzen eines Kommunikationsdienstes an einem spezifischen Ort, welchen das Mobilkommunikationsnetzwerk an dem spezifischen Ort zur Verfügung stellt, wobei das Kommunikationsnetzwerk den Kommunikationsdienst mittels einer Netzwerkschicht in dem Kernnetzwerk und in dem Funkzugangsnetzwerk zur Verfügung stellt;
einen Ermittler, eingerichtet zum Ermitteln, ob das Teilnehmerendgerät berechtigt ist, den Kommunikationsdienst an dem spezifischen Ort zu benutzen, basierend auf einer Registrierung des Teilnehmerendgerätes und/oder basierend auf den Richtlinien des Mobilkommunikationsnetzwerkbetreibers, wobei der Ermittler ferner zum Ermitteln eingerichtet ist, ob das Teilnehmerendgerät berechtigt ist, auf die Netzwerkschicht in dem Kernnetzwerk und in dem Funkzugangsnetzwerk zuzugreifen;
eine Zugangssteuerung, eingerichtet, um dem Teilnehmerendgerät Zugang zu dem Kommunikationsdienst zu gewähren, abhängig davon, ob das Teilnehmerendgerät berechtigt ist, den Kommunikationsdienst an dem spezifischen Ort zu benutzen, basierend auf der Registrierung des Teilnehmerendgerätes und/oder basierend auf den Richtlinien des Mobilkommunikationsnetzwerkbetreibers, aufweisend Erhalten von Netzwerkschichtbereichseinschränkungsinformationen von einer Netzwerkfunktion in dem 5G-Mobilkommunikationsnetzwerk und zur Verfügung stellen des Teilnehmerendgerätzugangs zu dem Kommunikationsdienst, basierend auf den Netzwerkschichtbereichseinschränkungsinformationen, wobei die Netzwerkschichtbereichseinschränkungsinformationen eine Liste von Kernnetzwerkschichten aufweisen, und für jede Kernnetzwerkschicht ein Kennzeichen, in welchem Bereich auf die Kernnetzwerkschicht von einem Teilnehmerendgerät zugegriffen werden kann; und
einen Sender, eingerichtet, um dem Teilnehmerendgerät die Netzwerkschichtbereichseinschränkungsinformationen zur Verfügung zu stellen.

## Revendications

1. Procédé exécuté par une fonction de gestion d'accès et de mobilité, AMF, (303), pour octroyer, à un terminal d'abonné (301), l'accès à un service de communication, le procédé comprenant les étapes ci-dessous consistant à :
recevoir une demande, en provenance d'un terminal d'abonné d'un réseau de communication mobile 5G, concernant l'utilisation d'un service de communication, dans un emplacement spécifique, que le réseau de communication mobile fournit dans l'emplacement spécifique, dans lequel le réseau de communication mobile fournit le service de communication au moyen d'une tranche de réseau dans le réseau central et dans le réseau d'accès radio ;
déterminer si le terminal d'abonné est autorisé à utiliser le service de communication dans l'emplacement spécifique sur la base d'un abonnement du terminal d'abonné et/ou sur la base de la politique de l'opérateur de réseau de communication mobile, dans lequel l'étape consistant à déterminer si le terminal d'abonné est autorisé à utiliser le service de communication consiste à déterminer si le terminal d'abonné est autorisé à accéder à la tranche de réseau dans le réseau central et dans le réseau d'accès radio ;
octroyer, au terminal d'abonné, l'accès au service de communication, selon que le terminal d'abonné est autorisé ou non à utiliser le service de communication dans l'emplacement spécifique sur la base de l'abonnement du terminal d'abonné et/ou sur la base de la politique de l'opérateur de réseau de communication mobile, et notamment obtenir des informations de restriction de zone de tranche de réseau à partir d'une fonction de réseau dans le réseau de communication mobile 5G, et fournir, au terminal d'abonné, l'accès au service de communication, sur la base des informations de restriction de zone de tranche de réseau, dans lequel les informations de restriction de zone de tranche de réseau comprennent une liste de tranches de réseau central et, pour chaque tranche de réseau central, une indication de la zone dans laquelle le terminal d'abonné peut accéder à la tranche de réseau central ; et
fournir, au terminal d'abonné, les informations de restriction de zone de tranche de réseau.

2. Procédé selon la revendication 1, dans lequel l'étape consistant à déterminer si le terminal d'abonné est autorisé à utiliser le service de communication dans l'emplacement spécifique est en outre basée sur une demande de restriction d'accès au service de communication effectuée par un fournisseur de services tiers.

3. Procédé selon la revendication 1 ou 2, dans lequel l'emplacement spécifique est une zone d'enregistrement ou dans lequel l'emplacement spécifique est une zone de suivi.

4. Procédé selon la revendication 1, dans lequel la fonction de réseau dans le réseau de communication mobile 5G est une fonction de commande de politique (PCF) ou une fonction de sélection de tranche de réseau (NSSF).

5. Procédé selon la revendication 1, dans lequel les informations de restriction de zone de tranche de réseau spécifient, pour chaque tranche parmi une ou plusieurs tranches de réseau dans le réseau central ou dans le réseau d'accès radio, et pour chaque emplacement parmi un ou plusieurs emplacements spécifiques, si le terminal d'abonné est autorisé à accéder à la tranche de réseau dans l'emplacement spécifique.

6. Procédé selon l'une quelconque des revendications 1 à 5, comprenant en outre l'étape consistant à envoyer, au terminal d'abonné, les informations de restriction de zone de tranche de réseau.

7. Agencement de composants de réseau de communication mobile comprenant une fonction de gestion d'accès et de mobilité, AMF, (303), dans lequel la fonction AMF (303) comprend :
un récepteur configuré de manière à recevoir une demande, en provenance d'un terminal d'abonné d'un réseau de communication mobile 5G, concernant l'utilisation d'un service de communication, dans un emplacement spécifique, que le réseau de communication mobile fournit dans l'emplacement spécifique, dans lequel le réseau de communication mobile fournit le service de communication au moyen d'une tranche de réseau dans le réseau central et dans le réseau d'accès radio ;
un module de détermination configuré de manière à déterminer si le terminal d'abonné est autorisé à utiliser le service de communication dans l'emplacement spécifique sur la base d'un abonnement du terminal d'abonné et/ou sur la base de la politique de l'opérateur de réseau de communication mobile, dans lequel le module de détermination est en outre configuré de manière à déterminer si le terminal d'abonné est autorisé à accéder à la tranche de réseau dans le réseau central et dans le réseau d'accès radio ;
un contrôleur d'accès configuré de manière à octroyer, au terminal d'abonné, l'accès au service de communication, selon que le terminal d'abonné est autorisé ou non à utiliser le service de communication dans l'emplacement spécifique sur la base de l'abonnement du terminal d'abonné et/ou sur la base de la politique de l'opérateur de réseau de communication mobile, et notamment à obtenir des informations de restriction de zone de tranche de réseau à partir d'une fonction de réseau dans le réseau de communication mobile 5G, et à fournir, au terminal d'abonné, l'accès au service de communication, sur la base des informations de restriction de zone de tranche de réseau, dans lequel les informations de restriction de zone de tranche de réseau comprennent une liste de tranches de réseau central et, pour chaque tranche de réseau central, une indication de la zone dans laquelle le terminal d'abonné peut accéder à la tranche de réseau central ; et
un émetteur configuré de manière à fournir, au terminal d'abonné, les informations de restriction de zone de tranche de réseau.
